# EUROPEAN PATENT APPLICATION

(11) **EP 4 773 499 A1**
(43) Date of publication of application: **08.07.2026**
(21) Application number: 23950800.5
(22) Date of filing: 31.08.2023
(51) Int. Cl.: H02M 7/49

(54) **ELECTRIC POWER CONVERSION APPARATUS**

(71) Applicant: MITSUBISHI ELECTRIC CORPORATION, Chiyoda-ku Tokyo 100-8310 (JP); TMEIC Corporation, Tokyo 104-0031 (JP)
(72) Inventor: KAJIYAMA, Takuya, Tokyo 100-8310 (JP); HIGAKI, Yusuke, Tokyo 100-8310 (JP); HIGASHITANI, Shohei, Tokyo 100-8310 (JP); NAKAYAMA, Akito, Tokyo 100-8310 (JP); ISOZAKI, Junpei, Tokyo 104-0031 (JP); WADA, Yuhei, Tokyo 104-0031 (JP)
(74) Representative: Witte, Weller & Partner Patentanwälte mbB
(86) International application number: PCT/JP2023/031913
(87) International publication number: WO 2025/046857

(57) **Abstract**

A power conversion device includes a power converter including a plurality of converter cells connected in series. Each converter cell includes a switching circuit including a plurality of first switching elements connected in series, a power storage element (28) connected in parallel to the switching circuit, a control circuit to control the switching circuit, and a power feeding circuit (30) to generate a control voltage which is based on a voltage of the power storage element (28), using a second switching element (53) and a transformer (56), and supply the control voltage to the control circuit. When the voltage of the power storage element (28) becomes equal to or more than a first threshold value in a state where control of the switching circuit is not started by the control circuit, the power feeding circuit (30) controls a switch (32) connected in series to a resistor (31) for discharging the power storage element (28) to be in an ON state such that a discharging current flows to the resistor (31).

## Description

### TECHNICAL FIELD

The present disclosure relates to a power conversion device.

### BACKGROUND ART

In recent years, a modular multilevel converter (MMC) has been known as a high-voltage and large-capacity power conversion device applied to a high-voltage system such as a power system. The MMC is constituted by arms including a plurality of cascade-connected unit converters called converter cells. Since the MMC has advantages such as high scalability and fewer harmonics, the MMC is widely applied to an alternating current (AC) - direct current (DC) converter, a reactive power compensation device (STATCOM: Static Synchronous Compensator), and the like applied to high-voltage DC power transmission (HVDC: High Voltage Direct Current).

Each converter cell is provided with a power feeding circuit to supply a control power source from the side of a main circuit such as a capacitor. Since a load of the power feeding circuit may be different for each converter cell, when switching elements of each converter cell are in an OFF state (for example, a floating state), imbalance may occur in voltages of the capacitors due to an error caused by imbalance of the loads of the power feeding circuits. Japanese Patent Laying-Open No. 2019-106785 (PTL 1) considers suppressing occurrence of imbalance in voltages of capacitors in a plurality of converter cells while suppressing unnecessary power consumption.

### CITATION LIST

### PATENT LITERATURE

PTL 1: Japanese Patent Laying-Open No. 2019-106785

### SUMMARY OF INVENTION

### TECHNICAL PROBLEM

PTL 1 is configured such that, in a floating state in which a plurality of switching elements included in each converter cell are set to an OFF state, as the capacitor has a higher voltage, the frequency at which a switch unit of a power feeding circuit included in the converter cell is set to an ON state increases. However, when the frequency at which the switch unit is set to the ON state increases in accordance with the voltage of the capacitor, a mechanism for adjusting the frequency at which the switch unit is set to the ON state is complicated, which also leads to a cost increase.

An object in an aspect of the present disclosure is to provide a power conversion device capable of suppressing imbalance in voltages of power storage elements in converter cells, with a simple configuration.

### SOLUTION TO PROBLEM

A power conversion device according to an embodiment includes a power converter including a plurality of converter cells connected in series. Each of the converter cells includes a switching circuit including a plurality of first switching elements connected in series, a power storage element connected in parallel to the switching circuit, a control circuit to control the switching circuit, and a power feeding circuit to generate a control voltage which is based on a voltage of the power storage element, using a second switching element and a transformer, and supply the control voltage to the control circuit. When the voltage of the power storage element becomes equal to or more than a first threshold value in a state where control of the switching circuit is not started by the control circuit, the power feeding circuit controls a switch connected in series to a resistor for discharging the power storage element to be in an ON state such that a discharging current flows to the resistor.

### ADVANTAGEOUS EFFECTS OF INVENTION

According to the present disclosure, it is possible to suppress imbalance in voltages of power storage elements in converter cells, with a simple configuration.

### BRIEF DESCRIPTION OF DRAWINGS

Fig. 1 is a diagram showing an exemplary configuration of a power conversion device.
Fig. 2 is a diagram showing exemplary configurations of a converter cell.
Fig. 3 is a block diagram showing an example of a hardware configuration of a control device.
Fig. 4 is a diagram for illustrating voltage imbalance in two converter cells.
Fig. 5 is a diagram showing an exemplary configuration of a power feeding circuit according to a comparative example.
Fig. 6 is a diagram showing an ideal voltage waveform of a capacitor of the converter cell.
Fig. 7 is a diagram showing an example of a voltage waveform of a capacitor of each of two converter cells.
Fig. 8 is a diagram showing another example of the voltage waveform of the capacitor of each of the two converter cells.
Fig. 9 is a diagram showing exemplary configurations of a power feeding circuit according to the present embodiment.
Fig. 10 is a diagram showing voltage waveforms of capacitors according to the present embodiment.
Fig. 11 is a diagram showing an exemplary configuration of a switch control unit according to a first modification of the present embodiment.
Fig. 12 is a diagram showing voltage waveforms of the capacitors according to the first modification of the present embodiment.
Fig. 13 is a diagram showing an exemplary configuration of a switch control unit according to a second modification of the present embodiment.
Fig. 14 is a diagram showing voltage waveforms of the capacitors according to the second modification of the present embodiment.
Fig. 15 is a diagram showing voltage waveforms of the capacitors according to a third modification of the present embodiment.
Fig. 16 is a diagram showing voltage waveforms of the capacitors according to a fourth modification of the present embodiment.

### DESCRIPTION OF EMBODIMENTS

Hereinafter, the present embodiment will be described with reference to the drawings. In the description below, identical parts will be designated by the same reference numerals. Since their names and functions are also the same, detailed description thereof will not be repeated.

### <Overall Configuration>

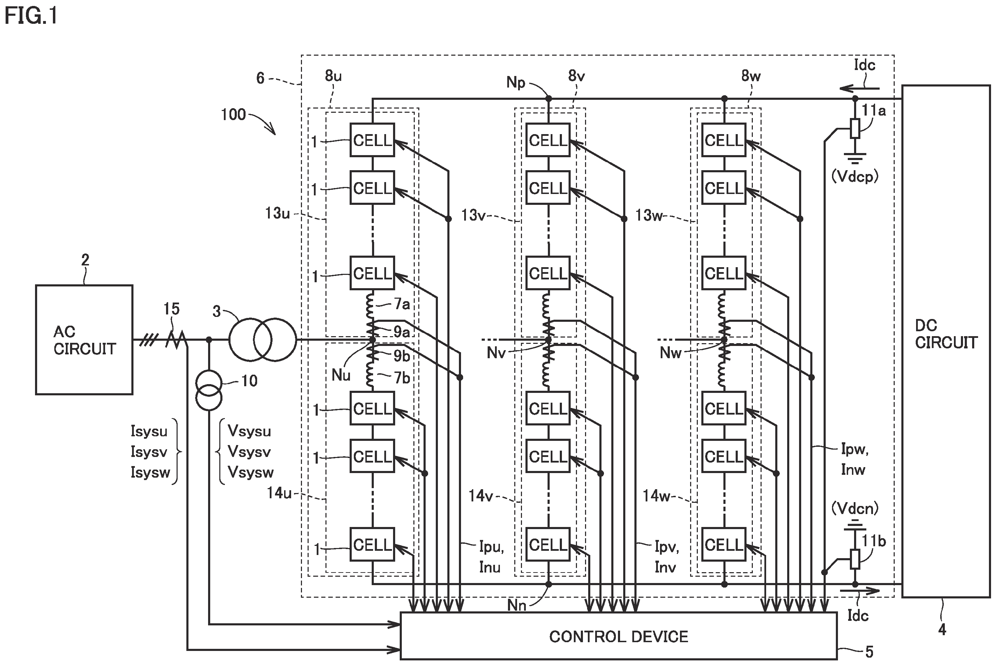

Fig. 1 is a diagram showing an exemplary configuration of a power conversion device 100. Referring to Fig. 1, power conversion device 100 is connected between an AC circuit 2 and a DC circuit 4. DC circuit 4 is, for example, a DC terminal of a DC power system including a DC power transmission network or the like, or of another power conversion device. DC circuit 4 may have a configuration including a power storage device connected to a DC terminal of a power converter 6. The power storage device includes, for example, an electric double layer capacitor, or a storage battery such as a lithium ion battery.

Power conversion device 100 includes self-commutated power converter 6, and a control device 5 to control power converter 6. Typically, power converter 6 is constituted by a modular multilevel converter including a plurality of converter cells (corresponding to "CELL" in Fig. 1) 1 connected in series to each other. A "converter cell" is also referred to as a "sub module" or a "unit converter".

Power converter 6 is a power converter that is connected to DC circuit 4 and performs power conversion between DC circuit 4 and AC circuit 2. Specifically, power converter 6 converts DC power outputted from DC circuit 4 into AC power, and outputs the AC power to AC circuit 2 via a transformer 3. Further, power converter 6 converts AC power from AC circuit 2 into DC power, and outputs the DC power to DC circuit 4.

In the example in Fig. 1, power converter 6 includes a plurality of arms for each phase of AC circuit 2. Specifically, power converter 6 includes a plurality of leg circuits 8u, 8v, and 8w (hereinafter described as a "leg circuit 8" when they are collectively referred to or any one of them is referred to) connected in parallel to each other between a positive electrode DC terminal (that is, a high potential-side DC terminal) Np and a negative electrode DC terminal (that is, a low potential-side DC terminal) Nn.

Leg circuit 8 is provided for each of a plurality of phases constituting an alternating current. Leg circuit 8 is connected between AC circuit 2 and DC circuit 4, and performs power conversion between the both circuits. Fig. 1 shows a case where AC circuit 2 is a three-phase AC system, and three leg circuits 8u, 8v, and 8w are provided corresponding to a U phase, a V phase, and a W phase, respectively.

AC terminals Nu, Nv, and Nw provided to leg circuits 8u, 8v, and 8w, respectively, are connected to AC circuit 2 via transformer 3. AC circuit 2 is, for example, a three-phase AC power system including an AC power source and the like. In Fig. 1, for ease of illustration, connection between AC terminal Nv, Nw and transformer 3 is not shown. The DC terminals (that is, positive electrode DC terminal Np and negative electrode DC terminal Nn) provided in common to leg circuits 8 are connected to DC circuit 4.

Leg circuits 8u, 8v, and 8w may be configured to be connected to AC circuit 2 via an interconnection reactor, instead of using transformer 3 in Fig. 1. Furthermore, leg circuits 8u, 8v, and 8w may be respectively provided with primary windings instead of AC terminals Nu, Nv, and Nw, and leg circuits 8u, 8v, and 8w may be AC-connected to transformer 3 or the interconnection reactor via secondary windings magnetically coupled to the primary windings. In this case, the primary windings may be reactors 7a and 7b described below. That is, leg circuits 8 are electrically (that is, DC- or AC-) connected to AC circuit 2 via connection portions provided to leg circuits 8u, 8v, and 8w, such as AC terminals Nu, Nv, and Nw or the primary windings described above.

Leg circuit 8u includes a positive-side arm 13u extending from positive electrode DC terminal Np to AC terminal Nu, and a negative-side arm 14u extending from negative electrode DC terminal Nn to AC terminal Nu. A connection point between positive-side arm 13u and negative-side arm 14u is connected, as AC terminal Nu, with transformer 3. Positive electrode DC terminal Np and negative electrode DC terminal Nn are connected to DC circuit 4. Leg circuit 8v includes a positive-side arm 13v and a negative-side arm 14v, and leg circuit 8w includes a positive-side arm 13w and a negative-side arm 14w. Since leg circuits 8v and 8w have the same configuration as that of leg circuit 8u, leg circuit 8u will be described below as a representative.

In leg circuit 8u, positive-side arm 13u includes a plurality of converter cells 1 cascade-connected to each other, and reactor 7a. The plurality of converter cells 1 and reactor 7a are connected in series to each other. Negative-side arm 14u includes a plurality of converter cells 1 cascade-connected to each other, and reactor 7b. The plurality of converter cells 1 and reactor 7b are connected in series to each other.

Reactor 7a may be inserted at any position in positive-side arm 13u, and reactor 7b may be inserted at any position in negative-side arm 14u. A plurality of reactors 7a and a plurality of reactors 7b may be provided. The reactors may have inductance values different from each other. Furthermore, only reactor 7a in positive-side arm 13u or only reactor 7b in negative-side arm 14u may be provided.

Power conversion device 100 further includes an AC voltage detector 10, an AC current detector 15, DC voltage detectors 11a and 11b, and arm current detectors 9a and 9b provided to each leg circuit 8. These detectors each measure an electrical quantity (that is, a current or a voltage) used to control power converter 6. Signals detected by these detectors are inputted to control device 5.

AC voltage detector 10 detects three-phase AC voltages Vsysu, Vsysv, and Vsysw (hereinafter also collectively referred to as an "AC voltage Vsys"). AC current detector 15 detects three-phase AC currents Isysu, Isysv, and Isysw (hereinafter also collectively referred to as an "AC current Isys") of AC circuit 2. DC voltage detector 11a detects a DC voltage Vdcp of positive electrode DC terminal Np connected to DC circuit 4. DC voltage detector 11b detects a DC voltage Vdcn of negative electrode DC terminal Nn connected to DC circuit 4.

Arm current detectors 9a and 9b provided to leg circuit 8u for the u phase detect a positive-side arm current Iup flowing to positive-side arm 13u and a negative-side arm current Iun flowing to negative-side arm 14u, respectively. Arm current detectors 9a and 9b provided to leg circuit 8v for the v phase detect a positive-side arm current Ivp and a negative-side arm current Ivn, respectively. Arm current detectors 9a and 9b provided to leg circuit 8w for the w phase detect a positive-side arm current Iwp and a negative-side arm current Iwn, respectively.

### <Configuration of Converter Cell>

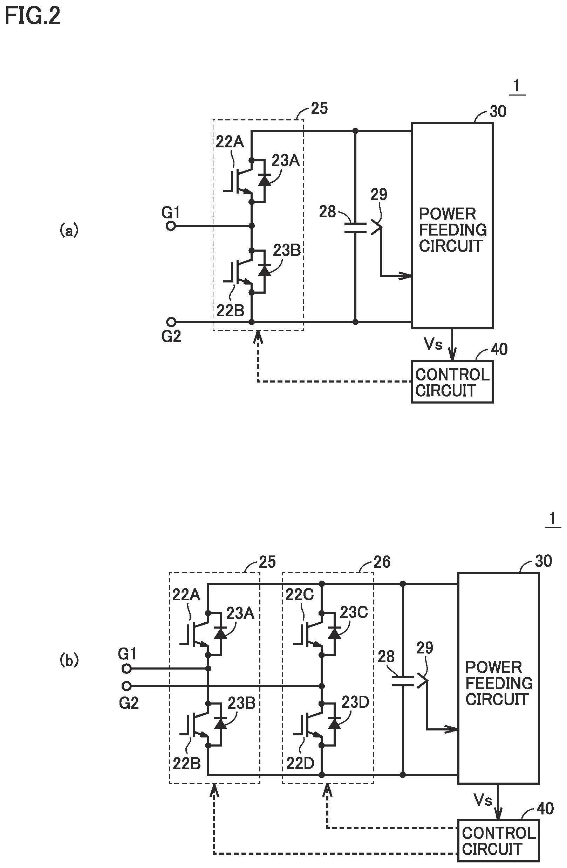

Fig. 2 is a diagram showing exemplary configurations of converter cell 1. Converter cell 1 shown in Fig. 2(a) has a circuit configuration called a half-bridge configuration.

Referring to Fig. 2(a), converter cell 1 includes a switching circuit 25, a capacitor 28 as a power storage element, a voltage detector 29, a power feeding circuit 30, and a control circuit 40. Switching circuit 25, capacitor 28, and power feeding circuit 30 are connected in parallel.

Switching circuit 25 includes two switching elements 22A and 22B connected in series, and diodes 23A and 23B. Diodes 23A and 23B are connected in anti-parallel (that is, in parallel and in a direction of reverse bias) to switching elements 22A and 22B, respectively. Capacitor 28 is connected in parallel to switching circuit 25, and holds a DC voltage. A voltage Vc across capacitor 28 is detected by voltage detector 29. Detected voltage Vc is inputted to power feeding circuit 30. It should be noted that voltage Vc may be inputted to control circuit 40. Control circuit 40 transmits voltage Vc to control device 5.

A connection node between switching elements 22A and 22B is connected with an input/output terminal G1 on a high potential side. A connection node between switching element 22B and capacitor 28 is connected with an input/output terminal G2 on a low potential side.

Capacitor 28 is charged by a current flowing through input/output terminals G1 and G2, and a voltage thereof increases. When the voltage of capacitor 28 increases, power feeding circuit 30 is activated. Power feeding circuit 30 generates a control voltage Vs based on the voltage of capacitor 28, and supplies (outputs) control voltage Vs to control circuit 40. A specific configuration of power feeding circuit 30 will be described later.

Control circuit 40 controls switching circuit 25. When control voltage Vs from power feeding circuit 30 is supplied to control circuit 40, control circuit 40 can control switching elements 22A and 22B. Typically, upon receiving a control permission notification for permitting start of control of switching circuit 25 from the outside of converter cell 1 (for example, from control device 5), control circuit 40 starts control of switching elements 22A and 22B. Thereby, on/off switching operations of switching elements 22A and 22B can be performed. Control circuit 40 is constituted, for example, by an application specific integrated circuit (ASIC), a field programmable gate array (FPGA), a combination thereof, or the like.

When switching element 22A is turned on and switching element 22B is turned off under the control of control circuit 40, voltage Vc of capacitor 28 is outputted between input/output terminals G1 and G2. When switching element 22A is turned off and switching element 22B is turned on, a zero voltage is outputted between input/output terminals G1 and G2. For example, control circuit 40 adjusts lengths of an ON time and an OFF time of each of switching elements 22A and 22B, and thereby controls each of the voltage between input/output terminals G1 and G2 and the voltage of capacitor 28 to have a corresponding target value. For example, these target values are set based on an AC voltage of AC circuit 2 and a DC voltage of DC circuit 4, the number of converter cells 1 constituting an arm, and the like.

Converter cell 1 shown in Fig. 2(b) has a circuit configuration called a full-bridge configuration. Referring to Fig. 2(b), converter cell 1 includes switching circuits 25 and 26, capacitor 28, voltage detector 29, and power feeding circuit 30. Switching circuit 25, switching circuit 26, capacitor 28, and power feeding circuit 30 are connected in parallel.

Switching circuit 26 includes two switching elements 22C and 22D connected in series, and diodes 23C and 23D. Diodes 23C and 23D are connected in anti-parallel to switching elements 22C and 22D, respectively. The connection node between switching elements 22A and 22B is connected with input/output terminal G1 on the high potential side, and a connection node between switching elements 22C and 22D is connected with input/output terminal G2 on the low potential side.

By turning on switching element 22D, turning off switching element 22C, and alternately setting switching elements 22A and 22B to an ON state, a positive voltage or a zero voltage is outputted between input/output terminals G1 and G2. Further, by turning off switching element 22D, turning on switching element 22C, and alternately setting switching elements 22A and 22B to the ON state, a zero voltage or a negative voltage is outputted between input/output terminals G1 and G2.

As each of switching elements 22A to 22D in Fig. 2(a) and Fig. 2(b), a self-turn-off switching element capable of controlling both an ON operation and an OFF operation is used. Switching elements 22A to 22D are each a self-turn-off semiconductor switching element such as an insulated gate bipolar transistor (IGBT) or a metal oxide semiconductor field-effect transistor (MOSFET). Further, in Fig. 2(a) and Fig. 2(b), a film capacitor or the like is mainly used as capacitor 28.

The following describes, as an example, a case where converter cell 1 has the configuration of a half-bridge cell shown in Fig. 2(a). However, converter cell 1 may have the full-bridge configuration shown in Fig. 2(b).

### <Hardware Configuration of Control Device>

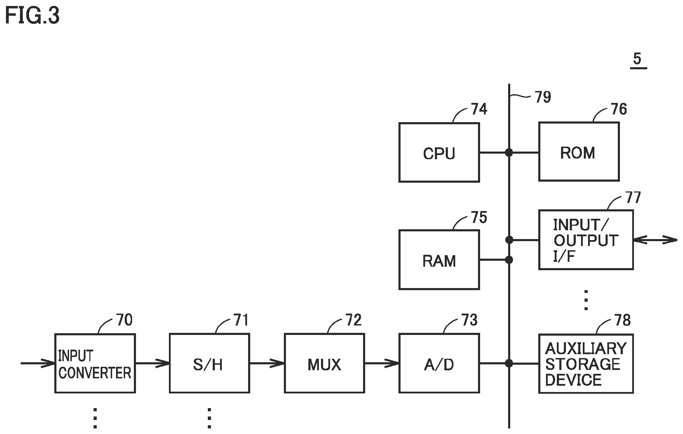

Fig. 3 is a block diagram showing an example of a hardware configuration of control device 5. Control device 5 in the case of Fig. 3 is constituted based on a computer. Referring to Fig. 3, control device 5 includes one or more input converters 70, one or more sample hold (S/H) circuits 71, a multiplexer (MUX) 72, and an A/D converter 73. Furthermore, control device 5 includes one or more central processing units (CPUs) 74, a random access memory (RAM) 75, and a read only memory (ROM) 76. Furthermore, control device 5 includes one or more input/output interfaces 77, an auxiliary storage device 78, and a bus 79 that mutually connects the components described above.

Input converter 70 includes an auxiliary transformer for each input channel. Each auxiliary transformer converts a detection signal detected by each detector in Fig. 1 into a signal having a voltage level suitable for subsequent signal processing.

Sample hold circuit 71 is provided for each input converter 70. Sample hold circuit 71 samples a signal indicating an electrical quantity received from corresponding input converter 70 using a specified sampling frequency, and holds the signal.

Multiplexer 72 sequentially selects the signals held in a plurality of sample hold circuits 71. A/D converter 73 converts a signal selected by multiplexer 72 into a digital value. It should be noted that A/D conversion may be performed in parallel on detection signals of a plurality of input channels, by providing a plurality of A/D converters 73.

CPU 74 controls entire control device 5, and performs computation processing according to a program. RAM 75 as a volatile memory and ROM 76 as a nonvolatile memory are used as main storages for CPU 74. ROM 76 stores programs, set values for signal processing, and the like. Auxiliary storage device 78 is a nonvolatile memory having a capacity larger than that of ROM 76, and stores programs, data of electrical quantity detection values, and the like. Input/output interface 77 is an interface circuit in communicating between CPU 74 and an external device.

It should be noted that at least a part of control device 5 may be constituted using a circuit such as an FPGA and an ASIC. Alternatively, at least a part of control device 5 can also be constituted by an analog circuit.

### <As to Voltage Imbalance>

### (Overview)

When power converter 6 is stopped, capacitor 28 of each converter cell 1 is in a fully discharged state, and switching elements 22A and 22B (hereinafter also collectively referred to as a "switching element 22") are in an OFF state (for example, a gate-blocked state). In order to start operation of power converter 6, first, it is necessary to initially charge capacitor 28 of each converter cell 1. For example, during initial charging, all capacitors 28 are charged at the same time by closing a circuit breaker (not shown) connected to a primary side (that is, an AC circuit 2 side) of transformer 3.

When the voltage of capacitor 28 increases by the initial charging, power feeding circuit 30 is activated. Thereafter, control circuit 40 starts on/off control of each switching element 22 in response to a control permission notification from control device 5. In a period from a time when power feeding circuit 30 is activated to a time when control circuit 40 starts the control of each switching element 22 (hereinafter also referred to as a "standby period"), each switching element 22 is not operated, and thus the voltage of capacitor 28 is charged by an initial charging current flowing through input/output terminals G1 and G2 of converter cell 1.

The initial charging current is determined by a voltage of AC circuit 2 or DC circuit 4 (for example, the circuit used for the initial charging) and impedances of converter cells 1 and reactors 7a and 7b, and the same initial charging current flows to the plurality of converter cells 1 connected in series at a certain time. Charging power supplied to one converter cell 1 by the initial charging current is the product of the voltage of capacitor 28 of that converter cell 1 and the initial charging current. When the voltage of AC circuit 2 or DC circuit 4 becomes equal to a total value of voltages of the plurality of converter cells 1, the initial charging current does not flow. However, when power feeding circuit 30 and control circuit 40 of converter cell 1 self-consume power, the initial charging current corresponding to that power continues to flow.

At a certain time, the voltage of AC circuit 2 or DC circuit 4 is divided by the plurality of converter cells 1 connected in series. Ideally, when characteristics of the plurality of converter cells 1 completely match with each other, divided voltages of converter cells 1 are equal to each other. In practice, the characteristics of the plurality of converter cells 1 do not completely match with each other due to component variations, and thus the divided voltages are not equal to each other. Specifically, power which is self-consumed in one converter cell 1 (hereinafter also referred to as "self-consumed power") is larger than a standard value, and self-consumed power in another converter cell 1 is smaller than the standard value. In this case, the divided voltages of converter cells 1 are not equal to each other.

Further, an average value of the voltages of capacitors 28 of the plurality of converter cells 1 connected in series (hereinafter also referred to as a "voltage average value") and an average value of the charging powers supplied to the plurality of converter cells 1 connected in series (hereinafter also referred to as a "power average value") are considered. When the voltage of capacitor 28 of one converter cell 1 is larger than the voltage average value, the charging power supplied to that converter cell 1 is larger than the power average value. On the other hand, when the voltage of capacitor 28 of another converter cell 1 is smaller than the voltage average value, the charging power supplied to the other converter cell 1 is smaller than the power average value.

As described above, in the plurality of converter cells 1 charged by the common initial charging current, a difference between the charging power for one converter cell 1 and the charging power for another converter cell 1 increases with time, due to a difference in the characteristics of converter cells 1. As a result, a difference between the voltage of capacitor 28 of the one converter cell 1 and the voltage of capacitor 28 of the other converter cell 1 increases with time. This is also referred to as voltage imbalance between the plurality of converter cells 1.

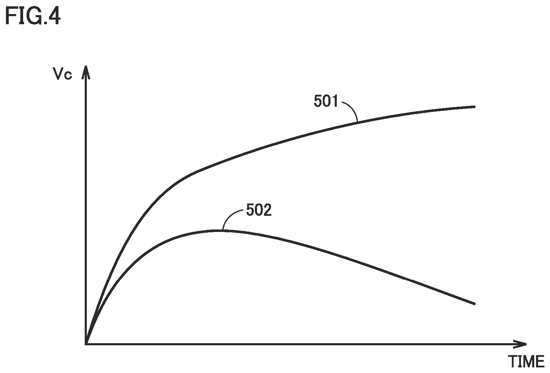

Fig. 4 is a diagram for illustrating voltage imbalance in two converter cells 1. Here, it is assumed that, of k converter cells 1 constituting an arm, an X-th converter cell 1x and a Y-th converter cell 1y have different power losses, where k is a natural number equal to or more than 2, and X and Y are different from each other.

Referring to Fig. 4, a graph 501 indicates a temporal change in voltage Vc of capacitor 28 of converter cell 1x (hereinafter also referred to as a "capacitor 28x" for convenience). A graph 502 indicates a temporal change in voltage Vc of capacitor 28 of converter cell 1y (hereinafter also referred to as a "capacitor 28y" for convenience). It is assumed that self-consumed power in converter cell 1x is smaller than the power average value, and self-consumed power in converter cell 1y is larger than the power average value.

Immediately after the initial charging current starts to flow, a voltage of power converter 6 is smaller than a voltage of a power system (for example, AC circuit 2 or DC circuit 4), and thus a large initial charging current flows to power converter 6. Accordingly, voltages Vc of capacitors 28x and 28y sharply increase.

Subsequently, as the charging proceeds and a difference between the voltage of the power system and the voltage of power converter 6 decreases, the magnitude of the initial charging current decreases. In this case, in converter cell 1x, the self-consumed power is smaller than supplied power, and thus voltage Vc of capacitor 28x increases. On the other hand, in converter cell 1y, the self-consumed power is larger than supplied power, and thus voltage Vc of capacitor 28x decreases. Thereby, voltage imbalance increases with time.

In order to prevent the voltage imbalance described above, when voltage Vc of capacitor 28 excessively increases, it is necessary to decrease power flowing into capacitor 28 so as to decrease voltage Vc.

### (Configuration of Power Feeding Circuit According to Comparative Example)

Here, in order to promote understanding of a specific configuration of power feeding circuit 30 according to the present embodiment that will be described later, a configuration of a power feeding circuit according to a comparative example will be described.

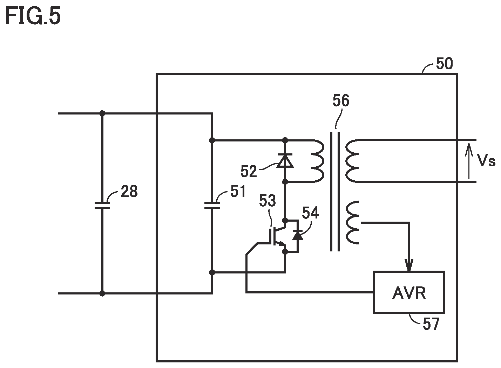

Fig. 5 is a diagram showing an exemplary configuration of the power feeding circuit according to the comparative example. Referring to Fig. 5, a power feeding circuit 50 includes a capacitor 51, a diode 52, a switching element 53, an anti-parallel diode 54, a transformer 56, and an auto voltage regulator (AVR) 57.

Capacitor 51 is connected in parallel to capacitor 28 of a converter cell, and is supplied with power. Accordingly, a voltage of capacitor 51 is the same as the voltage of capacitor 28. Transformer 56 includes a primary winding connected in parallel to capacitor 51 via switching element 53, a secondary winding for supplying the control voltage, and a tertiary winding for detecting a voltage.

Auto voltage regulator 57 controls on/off of switching element 53. By alternately repeating turning on and off of switching element 53, the voltage of capacitor 51 is intermittently applied to the primary winding of transformer 56.

Diode 52 has a role of preventing occurrence of a surge voltage when switching element 53 is changed from ON to OFF. In response to application of the voltage to the primary winding, voltages are outputted to the secondary winding and the tertiary winding by a voltage transformation operation. The voltage outputted to the secondary winding is converted into the control voltage required by control circuit 40 (for example, converted into a DC voltage by a rectifier diode and a smoothing capacitor), and is supplied to control circuit 40. Thus, power feeding circuit 50 is configured to generate the control voltage which is based on voltage Vc, using switching element 53 and the transformer, and supply the control voltage to control circuit 40.

The voltage outputted to the tertiary winding is used as information for adjusting an ON period and an OFF period of switching element 53 by auto voltage regulator 57. For example, when the voltage outputted to the tertiary winding becomes larger than a prescribed voltage, auto voltage regulator 57 decreases the voltage of the tertiary winding by shortening the ON period and lengthening the OFF period of switching element 53. By adjusting the voltage of the tertiary winding as described above, the voltage of the secondary winding is also adjusted.

As described above, power supply from capacitor 28 to control circuit 40 is performed by an on/off operation of switching element 53 and the voltage transformation operation of transformer 56. On this occasion, a switching loss and a conduction loss occur in switching element 53, and a core loss and a conduction loss occur in transformer 56. If such a power loss that occurs in power feeding circuit 50 is proportional to the voltage of capacitor 28, voltage imbalance during the standby period described above can be eliminated.

Flyback power feeding circuit 50 as shown in Fig. 5 is a switching power source, and suppresses the amount of power loss that occurs, unlike a dropper power source (also referred to as a linear power source or a series power source, for example). Further, power feeding circuit 50 has advantages over the dropper power source in that insulation between the primary side and the secondary side can be secured by using transformer 56, and in that transformer 56 can be downsized by a high-frequency operation of switching element 53. However, since the power loss that occurs in power feeding circuit 50 is not proportional to the voltage of capacitor 28, voltage imbalance cannot be eliminated.

### (Temporal Change in Voltage Vc in Each Converter Cell)

Here, a description will be given of a temporal change in voltage Vc when power feeding circuit 50 according to the comparative example is used in converter cell 1, in which voltage Vc of capacitor 28 increases by the initial charging current, and voltage Vc of capacitor 28 reaches a target voltage by the control of each switching element 22.

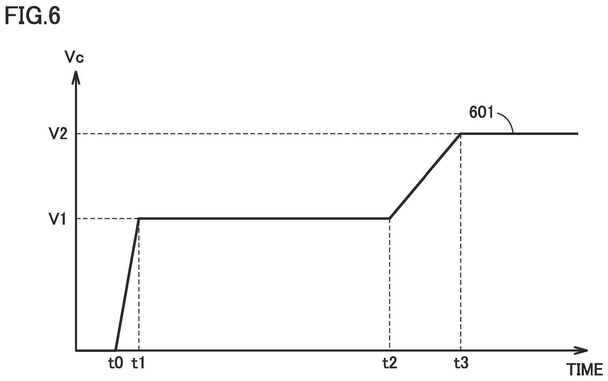

Fig. 6 is a diagram showing an ideal voltage waveform of capacitor 28 of converter cell 1. A voltage waveform 601 shown in Fig. 6 is a voltage waveform of capacitor 28 of one converter cell 1. When the characteristics of converter cells 1 constituting an arm match with each other, voltage waveform 601 serves as the voltage waveform of capacitor 28 of each converter cell 1. In Fig. 6, the axis of abscissas represents time, and the axis of ordinates represents voltage Vc of capacitor 28.

It should be noted that, in voltage waveform 601, a ripple voltage corresponding to a frequency of AC circuit 2 is ignored, and an average value per unit period is indicated. The same applies to voltage waveforms in the drawings described later.

Referring to Fig. 6, at a time t0, the circuit breaker is closed, and initial charging of capacitor 28 is started. The initial charging proceeds and power feeding circuit 50 is activated, and voltage Vc reaches an initial charging voltage V1 at a time t1. At time t1, the voltage of AC circuit 2 or DC circuit 4 is divided by converter cells 1 constituting an arm. A period from time t0 to time t1 corresponds to an initial charging period in which the plurality of converter cells 1 are initially charged.

Thereafter, ideally, power supplied to converter cell 1 by the initial charging current is balanced with self-consumed power in converter cell 1. In this case, voltage Vc maintains initial charging voltage V1 in a period from time t1 to a time t2. At time t2, in response to a control permission notification from control device 5, the control of each switching element 22 is started.

After time t2, each switching element 22 is driven, and voltage Vc of capacitor 28 of each converter cell 1 is adjusted to reach a target voltage (for example, rated voltage) V2. Thereby, at a time t3, voltage Vc reaches target voltage V2. After time t3, each switching element 22 is driven such that voltage Vc maintains target voltage V2.

Thus, when supplied power is balanced with self-consumed power in each converter cell 1, voltage Vc is maintained constant even in a period in which each switching element 22 is not driven (for example, the period from time t1 to time t2), and thus voltage imbalance does not occur.

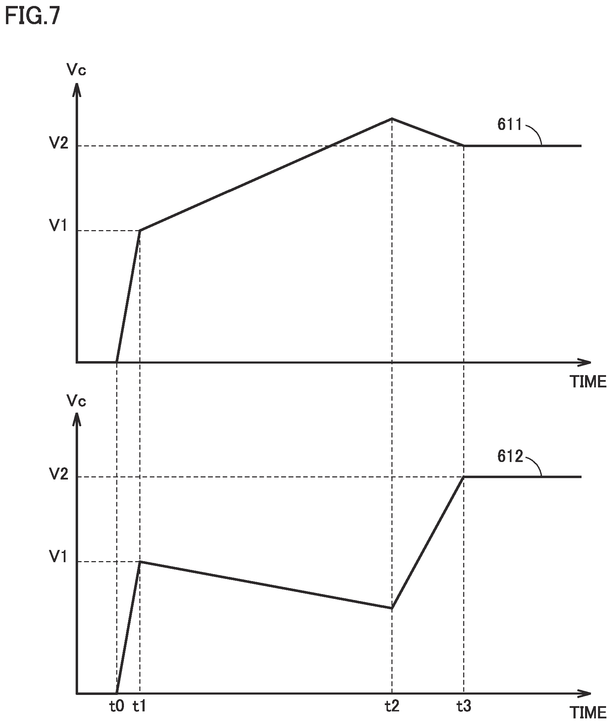

Fig. 7 is a diagram showing an example of a voltage waveform of capacitor 28 of each of two converter cells. Referring to Fig. 7, a voltage waveform 611 is a voltage waveform of capacitor 28 of X-th converter cell 1x, and a voltage waveform 612 is a voltage waveform of capacitor 28 of Y-th converter cell 1y. The definitions of times t0, t1, t2, and t3 are the same as those in Fig. 6.

Although it is conceivable that, due to a difference in power loss between converter cell 1x and converter cell 1y, initial charging voltages V1 at time t1 are different from each other, it is assumed here that the period from time t0 to time t1 is short and initial charging voltages V1 are the same. The same applies to the following voltage waveforms described later.

At time t1, the voltage of AC circuit 2 or DC circuit 4 is divided by converter cells 1 constituting an arm. After time t1, a division ratio between voltages Vc of capacitors 28 of converter cells 1x and 1y changes in accordance with the difference in power loss between converter cells 1x and 1y. Specifically, voltage Vc in converter cell 1x increases, and voltage Vc in converter cell 1y decreases. Then, at time t2, driving of each switching element 22 of converter cells 1x and 1y is started, and thereby, at time t3, voltages Vc in converter cells 1x and 1y are adjusted to target voltage V2.

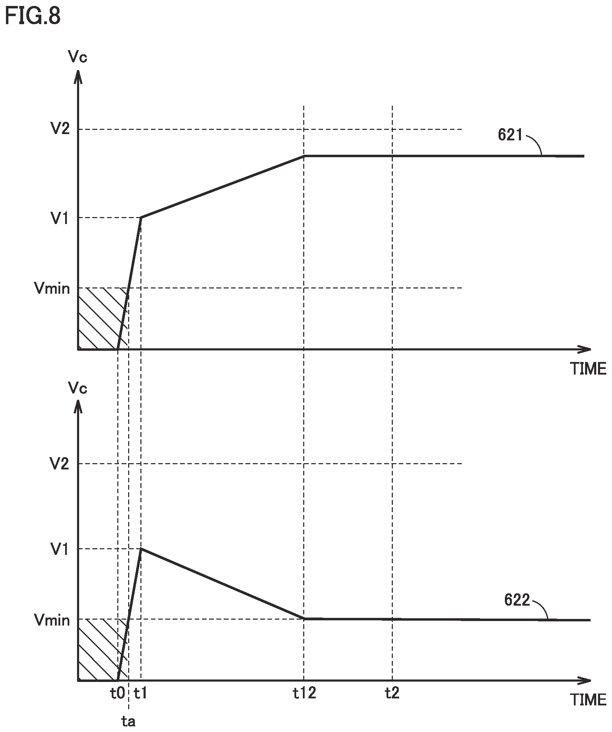

Fig. 8 is a diagram showing another example of the voltage waveform of capacitor 28 of each of two converter cells 1. Referring to Fig. 8, a voltage waveform 621 is a voltage waveform of capacitor 28 of X-th converter cell 1x, and a voltage waveform 622 is a voltage waveform of capacitor 28 of Y-th converter cell 1y. The definitions of times t0, t1, and t2 are the same as those in Fig. 6. Here, a description will be given of a case where voltage Vc in converter cell 1y reaches a minimum voltage Vmin of power feeding circuit 50 due to voltage imbalance.

Constant power is required to activate power feeding circuit 50. Accordingly, when power feeding circuit 50 is activated by a small input voltage from capacitor 28, it is necessary to increase an input current to power feeding circuit 50. However, designing the input current to power feeding circuit 50 to be increasable leads to an increase in the size of power feeding circuit 50. Thus, in power feeding circuit 50, minimum voltage Vmin that can activate power feeding circuit 50 is set such that the input current is not increased. It should be noted that minimum voltage Vmin is set to be smaller than an initially chargeable voltage (that is, initial charging voltage V1).

Referring to Fig. 8, when voltage Vc reaches minimum voltage Vmin by initial charging at a time ta, power feeding circuit 50 is activated. At time t1, voltage Vc reaches initial charging voltage V1. After time t1, voltage Vc in converter cell 1x increases, and voltage Vc in converter cell 1y decreases. Then, when voltage Vc of capacitor 28 of converter cell 1y decreases to minimum voltage Vmin at a time t12, power feeding circuit 50 of converter cell 1y is stopped.

Thereby, in converter cell 1y, no power loss occurs, and thus a decrease in voltage Vc is stopped. On the other hand, power feeding circuits 50 of other converter cells 1 except for converter cell 1y are operated, and thus a power loss occurs therein. Accordingly, voltage Vc of converter cell 1y increases and power feeding circuit 50 is reactivated, but a power loss occurs in power feeding circuit 50 due to the reactivation, and thereby voltage Vc decreases again and power feeding circuit 50 is stopped. Thus, voltage Vc of converter cell 1y maintains minimum voltage Vmin. Accordingly, voltage Vc of converter cell 1x is also maintained.

Therefore, after time t12, power feeding circuit 50 of converter cell 1y is substantially stopped. In this state, power supply from power feeding circuit 50 to control circuit 40 is not performed, and thus control circuit 40 cannot start the control of each switching element 22 in response to a control permission notification from control device 5 at time t2. As a result, power converter 6 cannot start a power transmission operation. Thus, it is necessary to prevent voltage Vc of each converter cell 1 from decreasing to minimum voltage Vmin in a standby period from the time when power feeding circuit 50 is activated to the time when control circuit 40 starts the control of each switching element 22 (for example, a period from time ta to time t2).

### <Configuration of Power Feeding Circuit According to the Present Embodiment>

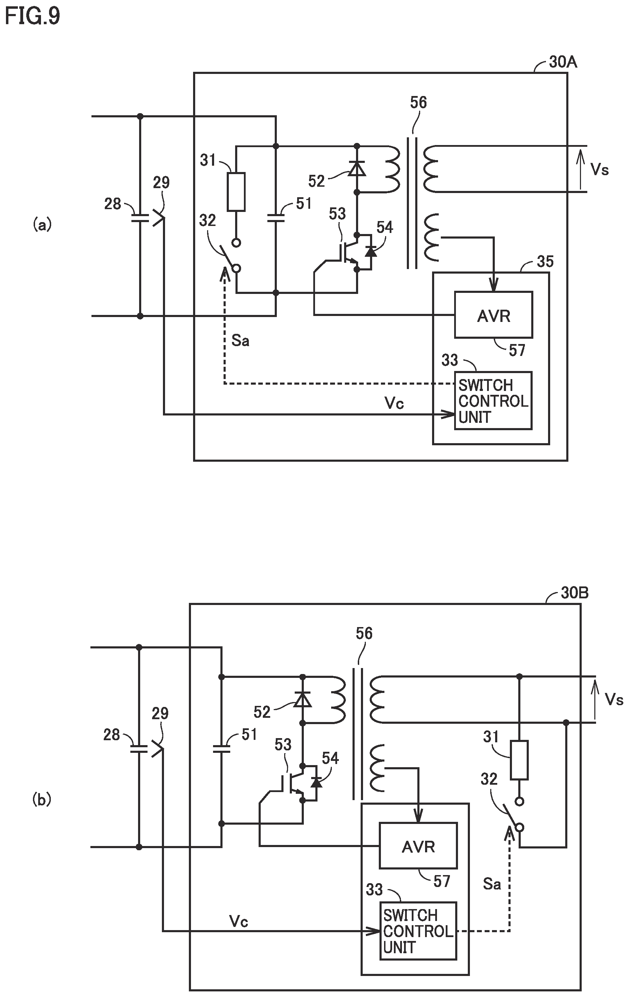

Fig. 9 is a diagram showing exemplary configurations of a power feeding circuit according to the present embodiment. Fig. 9(a) shows an exemplary configuration of a power feeding circuit 30A. Fig. 9(b) shows an exemplary configuration of a power feeding circuit 30B. While power feeding circuits 30A and 30B correspond to power feeding circuit 30 shown in Fig. 2, symbols "A" and "B" are added thereto for convenience, for the sake of distinction.

Referring to Fig. 9(a), power feeding circuit 30A includes a resistor 31, a switch 32, a control unit 35, capacitor 51, diode 52, switching element 53, anti-parallel diode 54, and transformer 56. Control unit 35 includes a switch control unit 33 and AVR 57. That is, power feeding circuit 30A has a configuration obtained by adding resistor 31, switch 32, and switch control unit 33 to power feeding circuit 50 according to the comparative example illustrated in Fig. 5. Detailed description of the same components as those of power feeding circuit 50 will not be repeated.

A series body including resistor 31 and switch 32 is connected in parallel to capacitors 28 and 51. Resistor 31 is provided to discharge energy of capacitor 28 (and capacitor 51). Switch 32 connected in series to resistor 31 is provided to control a current flowing to resistor 31. When switch 32 is set to an ON state, the current flows to resistor 31, and when switch 32 is set to an OFF state, no current flows to resistor 31. Switch 32 is constituted by a semiconductor switching element, for example.

Control unit 35 controls an operation of power feeding circuit 30A. Specifically, switch control unit 33 included in control unit 35 receives an input of voltage Vc of capacitor 28 detected by voltage detector 29. Since the voltage of capacitor 51 is the same as voltage Vc of capacitor 28, switch control unit 33 may receive an input of the voltage of capacitor 51.

When voltage Vc becomes equal to or more than a threshold value Vthl in a state where control of switching circuit 25 is not started by control circuit 40 after an activation time point of power feeding circuit 30A, switch control unit 33 controls switch 32 to be in the ON state such that a discharging current flows to resistor 31. Further, when voltage Vc becomes equal to or more than threshold value Vth1, and thereafter voltage Vc becomes less than threshold value Vth1, switch control unit 33 controls switch 32 to be in the OFF state such that no current flows to resistor 31. The activation time point of power feeding circuit 30A is a time point when voltage Vc becomes equal to or more than minimum voltage Vmin required to activate power feeding circuit 30A.

Specifically, switch control unit 33 compares voltage Vc with threshold value Vth1, and when switch control unit 33 determines that voltage Vc is equal to or more than threshold value Vth1, switch control unit 33 outputs a control signal Sa for controlling switch 32 to be in the ON state (for example, a signal at a high level). On the other hand, when switch control unit 33 determines that voltage Vc is less than threshold value Vth1, switch control unit 33 outputs control signal Sa for controlling switch 32 to be in the OFF state (for example, a signal at a low level). Therefore, when voltage Vc is equal to or more than threshold value Vth1, discharging by resistor 31 is performed, and when voltage Vc is less than threshold value Vth1, discharging by resistor 31 is not performed.

Referring to Fig. 9(b), a difference between power feeding circuit 30B and power feeding circuit 30A is where the series body including resistor 31 and switch 32 is provided. Specifically, in power feeding circuit 30B, the series body is connected in parallel to the secondary winding of transformer 56. Also when the series body is connected to a secondary winding side of transformer 56 as described above, it is possible to discharge capacitor 28. A voltage applied to the secondary winding of transformer 56 can be set lower than the voltage of capacitor 28. Therefore, a withstand voltage and an insulation performance required for resistor 31 and switch 32 are relaxed, which contributes to downsizing of the power feeding circuit. It should be noted that the same applies to a case where transformer 56 has the tertiary winding.

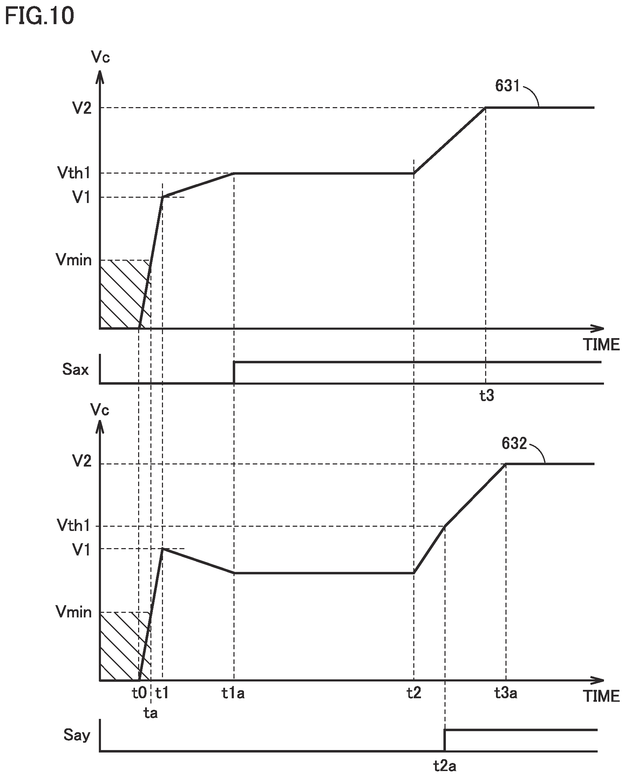

Fig. 10 is a diagram showing voltage waveforms of the capacitors according to the present embodiment. Referring to Fig. 10, a voltage waveform 631 is a voltage waveform of capacitor 28 of X-th converter cell 1x, and a voltage waveform 632 is a voltage waveform of capacitor 28 of Y-th converter cell 1y. The definitions of times t0, ta, t1, and t2 are the same as those in Fig. 8.

Further, it is assumed that, in converter cell 1x, the self-consumed power is small and thus voltage Vc tends to increase, and in converter cell 1y, the self-consumed power is large and thus voltage Vc tends to decrease, as described above. Further, control signal Sa in converter cell 1x is referred to as a "control signal Sax" for convenience, and control signal Sa in converter cell 1y is referred to as a "control signal Say" for convenience. The same applies to the following description.

When voltage Vc reaches minimum voltage Vmin by initial charging at time ta, power feeding circuit 30 is activated. At time t1, voltage Vc reaches initial charging voltage V1. At time t1, the voltage of AC circuit 2 or DC circuit 4 is divided by converter cells 1 constituting an arm. After time t1, voltage Vc in converter cell 1x increases, and voltage Vc in converter cell 1y decreases.

When voltage Vc of capacitor 28 of converter cell 1x reaches threshold value Vth1 at a time t1a, control signal Sax is set to the "high level" and switch 32 is controlled to be in the ON state. An electric charge of capacitor 28 is discharged by resistor 31, and thereby an increase in voltage Vc in converter cell 1x is suppressed. On the other hand, as the increase in voltage Vc in converter cell 1x is suppressed, a decrease in voltage Vc in converter cell 1y is suppressed. Threshold value Vth1 is set to a value larger than initial charging voltage V1.

The example in Fig. 10 shows a state where consumed power in resistor 31 of converter cell 1x is balanced with power that increases voltage Vc. Thereby, voltages Vc of converter cells 1x and 1y are maintained in a period from time t1a to time t2. However, it is not necessary to set the consumed power in resistor 31 so as not to change voltage Vc.

Specifically, when the consumed power in resistor 31 of converter cell 1x is insufficient after time t1, voltage Vc in converter cell 1x increases, and accordingly, voltage Vc in converter cell 1y decreases. However, it is only necessary that voltage Vc in converter cell 1y does not decrease to minimum voltage Vmin before each switching element 22 is operated at time t2.

Further, when the consumed power in resistor 31 of converter cell 1x is excessive after time t1, voltage Vc in converter cell 1x decreases, but when voltage Vc becomes less than threshold value Vth1, switch 32 is set to the OFF state, and thus the decrease in voltage Vc is stopped. Thereafter, even when voltage Vc increases again, the above-described operation is repeated after voltage Vc reaches threshold value Vth1. Accordingly, voltage Vc in converter cell 1x maintains a value close to threshold value Vth1. Hereinafter, the reason why voltage Vc in converter cell 1x maintains a value close to threshold value Vth1 will be described in more detail.

First, it is assumed that total consumed power of the self-consumed power in converter cell 1x and the consumed power in resistor 31 at threshold value Vth1 is the same as the self-consumed power in converter cell 1y. When voltage Vc in converter cell 1x reaches voltage Vth1, switch 32 is turned on and power is consumed by resistor 31. In this case, the total consumed power in converter cell 1x is balanced with the self-consumed power in converter cell 1y. Therefore, voltage Vc in converter cell 1x is maintained at a value close to threshold value Vth1.

Next, it is assumed that the total consumed power in converter cells 1x is larger than the self-consumed power in converter cells 1y. In this case, when switch 32 of converter cell 1x is turned on and power is consumed by resistor 31, the total consumed power in converter cell 1x becomes larger than the self-consumed power in converter cell 1y. On the other hand, when switch 32 of converter cell 1x is turned off and power is not consumed by resistor 31, the power consumed in converter cell 1x (that is, the self-consumed power in converter cell 1x) is smaller than the self-consumed power in converter cell 1y. Since switch 32 is switched on and off with threshold value Vth1 as a boundary, whether or not power is consumed by resistor 31 is also switched accordingly. Therefore, also in this case, voltage Vc in converter cell 1x is maintained at a value close to threshold value Vth1.

It should be noted that an operation of switching on and off of switch 32 does not need to be repeated at a high speed. Switch control unit 33 only needs to control the ON state and the OFF state of switch 32 such that voltage Vc of capacitor 28 does not decrease to minimum voltage Vmin. This is because, if switching on and off of switch 32 is controlled at an unnecessarily high speed, there occurs such a situation that switch 32 has a malfunction and its life is shortened.

From the above description, switch control unit 33 may have a hysteresis characteristic, like a Schmitt trigger. For example, when switch control unit 33 determines that voltage Vc is equal to or more than threshold value Vth1, switch control unit 33 controls switch 32 to be in the ON state. On the other hand, when switch control unit 33 determines that voltage Vc becomes equal to or more than threshold value Vth1 (that is, switch 32 is set to the ON state), and thereafter voltage Vc is less than a threshold value Vthla which is smaller than threshold value Vth1, switch control unit 33 controls switch 32 to be in the OFF state. Thus, switch control unit 33 may compare voltage Vc with threshold value Vth1 when it switches switch 32 from OFF to ON, and may compare voltage Vc with threshold value Vthla when it switches switch 32 from ON to OFF.

When control circuit 40 receives a control permission notification transmitted from control device 5 at time t2 after the activation time point of power feeding circuit 30, control circuit 40 starts the control of switching circuit 25 (for example, control of the driving of each switching element 22). The control of switching circuit 25 includes control of causing voltage Vc of capacitor 28 to follow target voltage V2. Thereby, in converter cell 1x, voltage Vc reaches target voltage V2 at time t3. On the other hand, in converter cell 1y, voltage Vc reaches threshold value Vth1 at a time t2a, and thus control signal Say is set to the "high level" and switch 32 is controlled to be in the ON state. Then, at a time t3a, voltage Vc reaches target voltage V2.

As described above, according to the configurations of power feeding circuits 30A and 30B, when voltage Vc in one converter cell 1 (for example, converter cell 1x) becomes equal to or more than threshold value Vth1 in the standby period from the activation time point (that is, time ta) to time t2, switch 32 is controlled from OFF to ON, and an increase in voltage Vc is suppressed. Accordingly, a decrease in voltage Vc in another converter cell 1 (for example, converter cell 1y) is suppressed, preventing voltage Vc from decreasing to minimum voltage Vmin. Therefore, it is possible to suppress voltage imbalance, and to prevent power feeding circuits 30A and 30B from being stopped. Further, switch control unit 33 having a function of controlling switch 32 can be implemented by simple components such as a comparison circuit.

### <Modifications of Switch Control Unit>

### (First Modification)

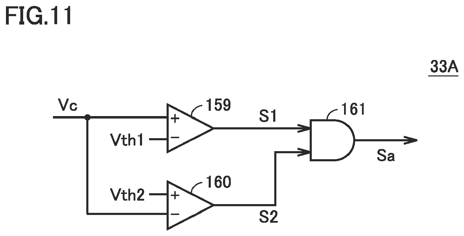

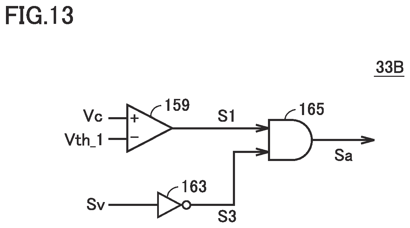

Fig. 11 is a diagram showing an exemplary configuration of a switch control unit 33A according to a first modification of the present embodiment. Referring to Fig. 11, switch control unit 33A includes a comparison circuit 159, a comparison circuit 160, and an AND circuit 161. While switch control unit 33A corresponds to switch control unit 33 in Fig. 9, a symbol "A" is added thereto for convenience, for the sake of distinction. The same applies to Fig. 13.

Comparison circuit 159 outputs a signal S1 with a value "1" (for example, at the high level) when voltage Vc is equal to or more than threshold value Vth1, and outputs signal S1 with a value "0" (for example, at the low level) when voltage Vc is less than threshold value Vth1. Comparison circuit 160 outputs a signal S2 with the value "1" when voltage Vc is less than a threshold value Vth2, and outputs signal S2 with the value "0" when voltage Vc is equal to or more than threshold value Vth2. It should be noted that threshold value Vth2 is set to a value which is larger than threshold value Vth1 and smaller than target voltage V2.

AND circuit 161 performs an AND operation of the value of signal S1 and the value of signal S2. Specifically, when the value of signal S1 is "1" (that is, voltage Vc is equal to or more than threshold value Vth1) and the value of signal S2 is "1" (that is, voltage Vc is less than threshold value Vth2), AND circuit 161 outputs control signal Sa with the value "1". Thereby, switch 32 is controlled to be in the ON state. When at least one of the value of signal S1 and the value of signal S2 is "0", AND circuit 161 outputs control signal Sa with the value "0". Thereby, switch 32 is controlled to be in the OFF state.

It should be noted that switch control unit 33A is not limited to the one having the exemplary configuration in Fig. 11. Specifically, switch control unit 33A only needs to be configured to control switch 32 to be in the OFF state when voltage Vc is less than threshold value Vth1, to control switch 32 to be in the ON state when voltage Vc is equal to or more than threshold value Vth1 and is less than threshold value Vth2, and to control switch 32 to be in the OFF state when voltage Vc is equal to or more than threshold value Vth2.

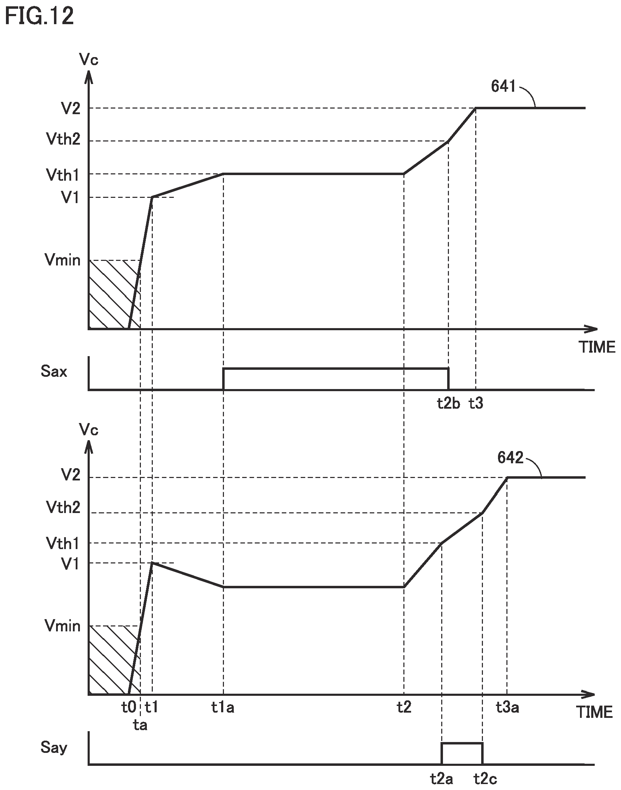

Fig. 12 is a diagram showing voltage waveforms of the capacitors according to the first modification of the present embodiment. Referring to Fig. 12, a voltage waveform 641 is a voltage waveform of capacitor 28 of X-th converter cell 1x, and a voltage waveform 642 is a voltage waveform of capacitor 28 of Y-th converter cell 1y. The definitions of times t0, ta, t1, tla, t2, t2a, t3, and t3a are the same as those in Fig. 10.

Since the flow until time t2 is the same as that in Fig. 10, detailed description thereof will not be provided. Here, since the period after time t2 is a period in which each switching element 22 is driven, voltage Vc converges toward target voltage V2.

In converter cell 1x, when voltage Vc reaches threshold value Vth2 at a time t2b, control signal Sax is set to the "low level" and switch 32 is controlled to be in the OFF state. Thereby, discharging of capacitor 28 is stopped by resistor 31 (that is, power consumption does not occur in resistor 31), and thus a rate of increase in voltage Vc increases. Thereafter, at time t3, voltage Vc reaches target voltage V2.

On the other hand, in converter cell 1y, when voltage Vc reaches threshold value Vth1 at time t2a, control signal Sa is set to the "high level" and switch 32 is controlled to be in the ON state. Thereby, discharging of capacitor 28 is started by resistor 31 (that is, power consumption occurs in resistor 31), and thus a rate of increase in voltage Vc decreases. When voltage Vc reaches threshold value Vth2 at a time t2c, control signal Sa is set to the "low level" and switch 32 is controlled to be in the OFF state. Thereby, discharging of capacitor 28 is stopped by resistor 31, and thus the rate of increase in voltage Vc increases. Thereafter, at time t3a, voltage Vc reaches target voltage V2.

After time t2, each switching element 22 is driven and voltage Vc can be controlled, and thereby it is not necessary to perform discharging of capacitor 28 in resistor 31. Accordingly, power consumption in resistor 31 after time t2 is an unnecessary power loss. As described above, according to the first modification, it is possible to suppress voltage imbalance in the standby period from time ta to time t2, and suppress occurrence of an unnecessary power loss after time t2.

### (Second Modification)

Fig. 13 is a diagram showing an exemplary configuration of a switch control unit 33B according to a second modification of the present embodiment. Referring to Fig. 13, switch control unit 33B includes comparison circuit 159, a NOT circuit 163, and an AND circuit 165.

Since comparison circuit 159 is the same as that in Fig. 11, detailed description thereof will not be repeated. NOT circuit 163 outputs a signal S3 obtained by inverting a logic level of a signal Sv. Specifically, the value "1" of signal Sv indicates a state where the control (driving) of each switching element 22 is permitted, and the value "0" of signal Sv indicates a state where the control of each switching element 22 is not permitted.

Therefore, when the control of each switching element 22 is permitted, the value of signal S3 is "0", and when the control is not permitted, the value of signal S3 is "1". Thereby, switch control unit 33B determines that the control of each switching element 22 is permitted. Typically, when switch control unit 33B receives a control permission notification from control device 5, switch control unit 33B determines that the value of signal Sv is "1", and when switch control unit 33B does not receive a control permission notification, switch control unit 33B determines that the value of signal Sv is "0".

AND circuit 165 performs an AND operation of the value of signal S1 and the value of signal S3. Specifically, when the value of signal S1 is "1" (that is, voltage Vc is equal to or more than threshold value Vth1) and the value of signal S3 is "1" (that is, the control of each switching element 22 is not permitted), AND circuit 165 outputs control signal Sa with the value "1". Thereby, switch 32 is controlled to be in the ON state. When at least one of the value of signal S1 and the value of signal S3 is "0", AND circuit 165 outputs control signal Sa with the value "0". Thereby, switch 32 is controlled to be in the OFF state.

It should be noted that switch control unit 33B is not limited to the one having the exemplary configuration in Fig. 13. Specifically, when the control of each switching element 22 is not permitted and voltage Vc is less than threshold value Vth1, switch control unit 33B controls switch 32 to be in the OFF state, and when the control of each switching element 22 is not permitted and voltage Vc is equal to or more than threshold value Vth1, switch control unit 33B controls switch 32 to be in the ON state. Furthermore, when the control of each switching element 22 is permitted, switch control unit 33B controls switch 32 to be in the OFF state, regardless of the value of voltage Vc.

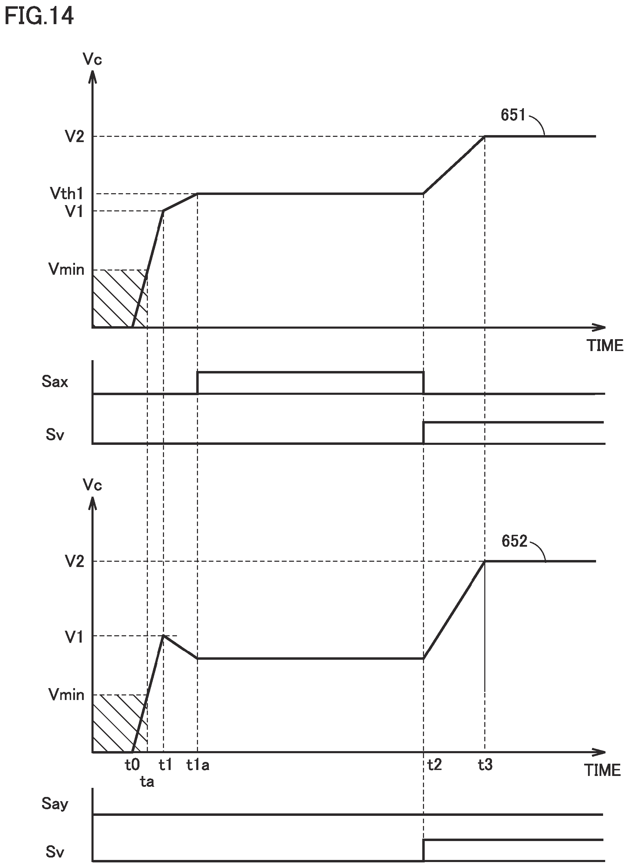

Fig. 14 is a diagram showing voltage waveforms of the capacitors according to the second modification of the present embodiment. Referring to Fig. 14, a voltage waveform 651 is a voltage waveform of capacitor 28 of X-th converter cell 1x, and a voltage waveform 652 is a voltage waveform of capacitor 28 of Y-th converter cell 1y. The definitions of times t0, ta, t1, tla, t2, and t3 are the same as those in Fig. 10.

From time t0 to time t2, the control of each switching element 22 is not permitted. Accordingly, when voltage Vc of capacitor 28 of converter cell 1x reaches threshold value Vth1 at time tla, control signal Sax is set to the "high level" and switch 32 is controlled to be in the ON state. Therefore, as illustrated in Fig. 10, voltage imbalance is suppressed. That is, changes in the voltages of capacitors 28 of converter cells 1x and 1y until time t2 are the same as those in Fig. 10.

At time t2, in response to a control permission notification from control device 5, control circuit 40 starts the driving of each switching element 22. Further, power feeding circuit 30 (specifically, switch control unit 33B) receives the control permission notification transmitted from control device 5. Thereby, switch control unit 33B determines that the control of each switching element 22 is permitted. Therefore, signal Sv shown in Fig. 13 is set to the "high level". Accordingly, in converter cell 1x, control signal Sax is set to the "low level" and switch 32 is controlled to be in the OFF state. In converter cell 1y, the OFF state of switch 32 is maintained.

From the above description, after time t2 at which the control of each switching element 22 is started, power feeding circuits 30 in converter cells 1x and 1y control switches 32 to be in the OFF state. Accordingly, it is possible to suppress occurrence of an unnecessary power loss in resistor 31 after time t2.

### <Third Modification>

Although threshold value Th1 is set to be larger than initial charging voltage V1 in the embodiment described above, the present disclosure is not limited to such a configuration. In a third modification, a description will be given of a configuration in which threshold value Th1 is set to be smaller than initial charging voltage V1.

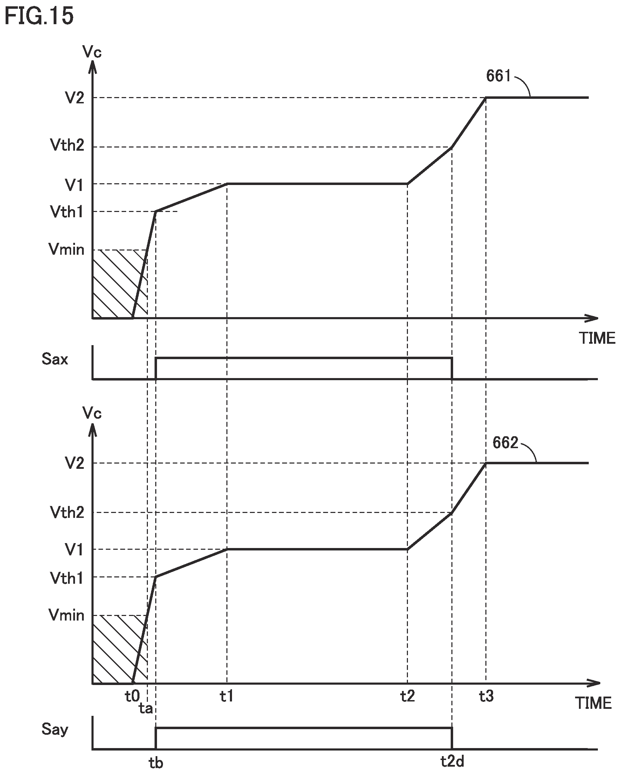

Fig. 15 is a diagram showing voltage waveforms of the capacitors according to the third modification of the present embodiment. While it is assumed in Fig. 15 that power feeding circuit 30 has the function of switch control unit 33A shown in Fig. 11, power feeding circuit 30 may have the function of switch control unit 33 shown in Fig. 9 or switch control unit 33B shown in Fig. 13. Further, threshold value Th1 is set to be larger than minimum voltage Vmin and smaller than initial charging voltage V1.

Referring to Fig. 15, a voltage waveform 661 is a voltage waveform of capacitor 28 of X-th converter cell 1x, and a voltage waveform 662 is a voltage waveform of capacitor 28 of Y-th converter cell 1y. The definitions of times t0, ta, t1, t2, and t3 are the same as those in Fig. 10.

When voltage Vc reaches minimum voltage Vmin by initial charging at time ta, power feeding circuit 30 is activated. At a time tb, voltages Vc of capacitors 28 of converter cells 1x and 1y reach threshold value Vth1. Thereby, control signals Sax and Say are set to the "high level" and switches 32 in converter cells 1x and 1y are controlled to be in the ON state. Accordingly, electric charges of capacitors 28 are discharged by resistors 31, and the rates of increase in voltages Vc decrease.

At time t1, voltages Vc in converter cells 1x and 1y reach initial charging voltage V1. Thereafter, in a period from time t1 to time t2, voltages Vc in converter cells 1x and 1y maintain initial charging voltage V1. Therefore, voltage imbalance is suppressed.

Here, the reason why voltages Vc in converter cells 1x and 1y are maintained at initial charging voltage V1 will be described. It is assumed that Pd indicates a difference between the self-consumed power in converter cell 1x and the self-consumed power in converter cell 1y, "V1+ΔV" indicates a voltage higher than initial charging voltage V1 by ΔV, "V1-ΔV" indicates a voltage lower than initial charging voltage V1 by ΔV, Ph indicates consumed power in resistor 31 at voltage (V1+ΔV), and Pl indicates consumed power in resistor 31 at voltage (V1-ΔV).

When difference Pd is sufficiently smaller than a difference between consumed power Ph and consumed power Pl (that is, Ph-Pl) (that is, Pd << (Ph-Pl)), a voltage difference between voltage Vc in converter cell 1x and voltage Vc in converter cell 1y becomes smaller than "ΔV×2". Since it is assumed in Fig. 15 that ΔV is sufficiently small, voltages Vc in converter cells 1x and 1y are maintained at initial charging voltage V1. It should be noted that, when ΔV is not sufficiently small, voltage Vc in converter cell 1x is maintained at "V1+ΔV", and voltage Vc in converter cell 1y is maintained at "V1-ΔV". Also in this case, voltage imbalance is suppressed.

At time t2, the driving of each switching element 22 of each converter cell 1 is started. When voltages Vc in converter cells 1x and 1y reach threshold value Vth2 at a time t2d, switches 32 are controlled to be in the OFF state. Thereafter, at time t3, voltages Vc in converter cells 1x and 1y reach target voltage V2. As a result, voltage waveform 661 and voltage waveform 662 are substantially the same waveform.

### <Fourth Modification>

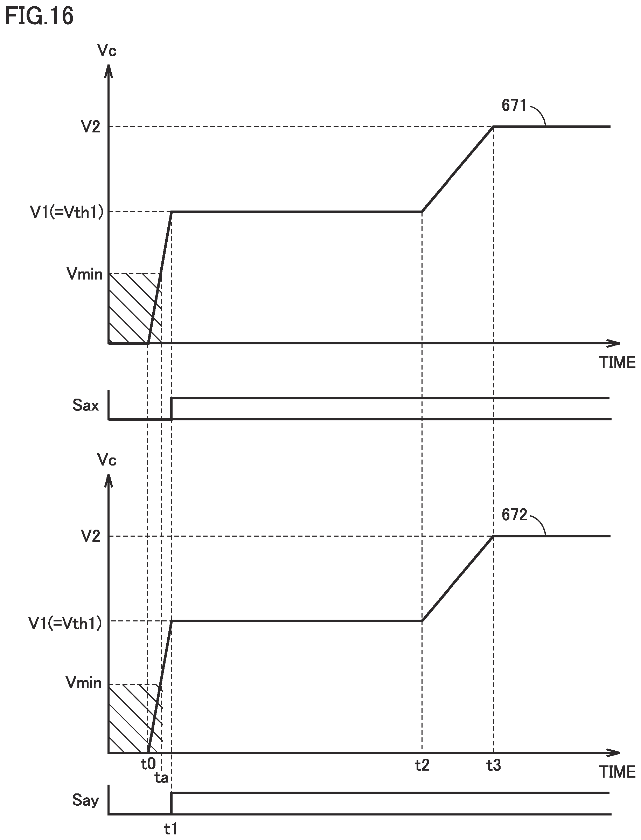

Fig. 16 is a diagram showing voltage waveforms of the capacitors according to a fourth modification of the present embodiment. While it is assumed in Fig. 16 that power feeding circuit 30 has the function of switch control unit 33 shown in Fig. 9, power feeding circuit 30 may have the function of switch control unit 33A shown in Fig. 11 or switch control unit 33B shown in Fig. 13. Further, threshold value Th1 is set to be the same as initial charging voltage V1.

Initial charging voltage V1 is set based on a voltage during initial charging, of one of AC circuit 2 and DC circuit 4 used for the initial charging, and the number (for example, k) of the plurality of converter cells 1 included in an arm of power converter 6.

Here, it is assumed that the voltage of DC circuit 4 is used for the initial charging, and "Vdc" indicates a DC voltage of DC circuit 4 during the initial charging. In this case, in power converter 6, two arms each including k converter cells 1 are connected in series, and the two arms are connected in parallel to DC circuit 4. Accordingly, DC voltage Vdc is divided by "k×2" converter cells 1. When the voltage is equally divided, a voltage in one converter cell 1 is "Vdc/(k×2)". Therefore, initial charging voltage V1 is "Vdc/(k×2)". As a result, threshold value Th1 is set to "Vdc/(k×2)".

Referring to Fig. 16, a voltage waveform 671 is a voltage waveform of capacitor 28 of X-th converter cell 1x, and a voltage waveform 672 is a voltage waveform of capacitor 28 of Y-th converter cell 1y. The definitions of times t0, ta, t1, t2, and t3 are the same as those in Fig. 10.

When voltage Vc reaches minimum voltage Vmin by the initial charging at time ta, power feeding circuit 30 is activated. At time t1, voltages Vc of capacitors 28 of converter cells 1x and 1y reach threshold value Vth1 (that is, initial charging voltage V1). Thereby, control signals Sax and Say are set to the "high level", and switches 32 in converter cells 1x and 1y are controlled to be in the ON state. In the period from time t1 to time t2, voltages Vc in converter cells 1x and 1y maintain initial charging voltage V1. Therefore, voltage imbalance is suppressed. It should be noted that the reason why voltages Vc in converter cells 1x and 1y are maintained at initial charging voltage V1 is the same as that illustrated in Fig. 15.

At time t2, the driving of each switching element 22 of each converter cell 1 is started. At time t3, voltages Vc in converter cells 1x and 1y reach target voltage V2. As a result, voltage waveform 671 and voltage waveform 672 are substantially the same waveform. It should be noted that voltage waveforms 671 and 672 are the ideal voltage waveform illustrated in Fig. 6 described above.

### Other Embodiments.

(1) Although the embodiment described above has described a configuration in which resistor 31 is provided inside power feeding circuit 30, the present disclosure is not limited to the configuration. For example, resistor 31 may be provided outside power feeding circuit 30. In this case, heat generated by power consumption in resistor 31 can be exhausted to the outside of power feeding circuit 30, and thus it is possible to avoid power feeding circuit 30 from having an increased size and a higher thermal conductivity.
(2) The configuration exemplified as the embodiment described above is an exemplary configuration of the present disclosure, and can be combined with another known technique, or can be configured as being modified, for example, partially omitted, without departing from the gist of the present disclosure. Further, in the embodiment described above, the processing and the configuration described in another embodiment may be adopted and performed as appropriate.

It should be understood that the embodiment disclosed herein is illustrative and non-restrictive in every respect. The scope of the present disclosure is defined by the scope of the claims, rather than the description above, and is intended to include any modifications within the scope and meaning equivalent to the scope of the claims.

### REFERENCE SIGNS LIST

1: converter cell; 2: AC circuit; 3: transformer; 4: DC circuit; 5: control device; 6: power converter; 7a, 7b: reactor; 8u, 8v, 8w: leg circuit; 9a, 9b: arm current detector; 10: AC voltage detector; 11a, 11b: DC voltage detector; 13u to 13w: positive-side arms; 14u to 14w: negative-side arms; 15: AC current detector; 22A to 22D, 53: switching elements; 23A to 23D, 52: diodes; 25, 26: switching circuit; 28, 51: capacitor; 29: voltage detector; 30, 30A, 30B, 50: power feeding circuit; 31: resistor; 32: switch; 33, 33A, 33B: switch control unit; 35: control unit; 40: control circuit; 54: anti-parallel diode; 56: transformer; 57: auto voltage regulator; 70: input converter; 71: sample hold circuit; 72: multiplexer; 73: A/D converter; 74: CPU; 75: RAM; 76: ROM; 77: input/output interface; 78: auxiliary storage device; 79: bus; 100: power conversion device; 159, 160: comparison circuit; 161, 165: AND circuit; 163: NOT circuit.

## Claims

1. A power conversion device comprising:
a power converter including a plurality of converter cells connected in series, wherein
each of the converter cells includes
a switching circuit including a plurality of first switching elements connected in series,
a power storage element connected in parallel to the switching circuit,
a control circuit to control the switching circuit, and
a power feeding circuit to generate a control voltage which is based on a voltage of the power storage element, using a second switching element and a transformer, and supply the control voltage to the control circuit, and
when the voltage of the power storage element becomes equal to or more than a first threshold value in a state where control of the switching circuit is not started by the control circuit, the power feeding circuit controls a switch connected in series to a resistor for discharging the power storage element to be in an ON state such that a discharging current flows to the resistor.

2. The power conversion device according to claim 1, wherein, when the voltage of the power storage element becomes equal to or more than the first threshold value, and thereafter becomes less than the first threshold value or less than a second threshold value which is smaller than the first threshold value, the power feeding circuit controls the switch to be in an OFF state such that the discharging current does not flow to the resistor.

3. The power conversion device according to claim 1 or 2, wherein the first threshold value is larger than a minimum voltage required to activate the power feeding circuit.

4. The power conversion device according to claim 3, wherein
an initial charging voltage of the power storage element is set to a value which is larger than the minimum voltage, and
the first threshold value is set to a value which is equal to or more than the initial charging voltage.

5. The power conversion device according to claim 4, wherein
the power converter performs power conversion between an AC circuit and a DC circuit, and
the initial charging voltage is set based on a DC voltage of the DC circuit or an AC voltage of the AC circuit during initial charging, and a number of the converter cells included in an arm of the power converter.

6. The power conversion device according to any one of claims 1 to 5, wherein
the control circuit starts the control of the switching circuit at a first time point after an activation time point of the power feeding circuit, and the control of the switching circuit includes control of causing the voltage of the power storage element to follow a target voltage, and
when the voltage of the power storage element becomes equal to or more than a third threshold value which is larger than the first threshold value and is smaller than the target voltage after the first time point, the power feeding circuit controls the switch to be in an OFF state such that the discharging current does not flow to the resistor.

7. The power conversion device according to claim 6, wherein the first time point is a time point when the control circuit receives a notification for permitting start of the control of the switching circuit.

8. The power conversion device according to any one of claims 1 to 5, wherein, when the control of the switching circuit is started by the control circuit, the power feeding circuit controls the switch to be in an OFF state such that the discharging current does not flow to the resistor.

9. The power conversion device according to any one of claims 1 to 8, wherein
the switch is provided inside the power feeding circuit, and
the resistor is provided outside the power feeding circuit.
